(19) Europäisches Patentamt
European Patent Office
Office européen des brevets

(11) **EP 3 035 029 A1**

(12) **EUROPEAN PATENT APPLICATION**
published in accordance with Art. 153(4) EPC

(43) Date of publication:
**22.06.2016 Bulletin 2016/25**

(51) Int Cl.:
*G01N 15/08* [(2006.01)]    *G01N 15/00* [(2006.01)]

(21) Application number: **15800196.6**

(22) Date of filing: **28.05.2015**

(86) International application number:
**PCT/JP2015/065406**

(87) International publication number:
**WO 2015/182706 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.05.2014 JP 2014111695**

(71) Applicant: **Chemical Materials Evaluation And Research Base**
**Tsukuba-shi, Ibaraki 305-8565 (JP)**

(72) Inventors:
• **SUZUKI, Akira**
 **Tsukuba-shi**
 **Ibaraki 305-8565 (JP)**
• **HARA, Shigeki**
 **Tsukuba-shi**
 **Ibaraki 305-8565 (JP)**
• **TAKAHAGI, Hisashi**
 **Tsukuba-shi**
 **Ibaraki 305-8565 (JP)**
• **UEHIGASHI, Atsushi**
 **Tsukuba-shi**
 **Ibaraki 305-8565 (JP)**

(74) Representative: **Bobbert & Partner**
**Patentanwälte PartmbB**
**Postfach 1252**
**85422 Erding (DE)**

(54) **STANDARD FILM FOR CORRECTION OF WATER VAPOR PERMEABILITY MEASUREMENT DEVICE, METHOD FOR MANUFACTURING SAME, STANDARD FILM SET FOR CORRECTION, AND CORRECTION METHOD USING SAME**

(57)    An object of the present invention is to provide a standard sample for calibration that is applicable to many water vapor transmission rate measuring apparatuses without the need of an exclusive connection portion and can be used for calibration of the measuring apparatuses with an attachment mechanism similar to a general film-like sample and under measurement conditions. In addition, another object of the present invention is to provide a standard film set for calibration and a calibration method that use a plurality of standard films for calibration and can correct a value of WVTR to offset the change in water vapor transmission rate due to physical properties of an adhesive material used for bonding of the films, for example. A standard film for calibration (10) according to the present invention is configured such that a barrier layer (12) is provided on a resin film (11) and the barrier layer (12) includes at least one of small holes (13), and is a standard film for calibration of a water vapor transmission rate measuring apparatus for measuring water vapor transmission rate of $10^{-3}$ g/m$^2$/day or less, in which when an equivalent circle radius of the small hole (13) is defined as R [$\mu$m] and a thickness of the resin film (11) is defined as L [$\mu$m], a relation of R/L $\leq$ 5 is satisfied.

[Fig.1]

**Description**

Technical Field

The present invention relates to a standard film for calibration of a water vapor transmission rate measuring apparatus for evaluating barrier properties of a gas and a production method thereof, and a standard film set for calibration and a calibration method using the same.

Background Art

Recently, in an organic electronic device element such as an organic electroluminescent (organic EL) element or an organic thin-film solar cell element, since it is considered that a trace of gas such as water vapor or oxygen intruding from the outside is a factor of lowering performance of the device, a sealing is generally applied for the purpose of blocking the intrusion gas. In order to make the element flexible, further, rather than the conventional glass, a barrier film using a polymer film as a base material has been used as an element substrate or a sealing material.

In the organic EL and the organic thin-film solar cell element, a barrier film having water vapor transmission rate (WVTR) of $10^{-6}$ to $10^{-3}$ g/m$^2$/day in order is required. As an apparatus and a method for measuring high sensitivity water vapor transmission rate of $10^{-6}$ to $10^{-3}$ g/m$^2$/day in order, API-MS (Atmospheric Pressure Ionization-Mass Spectrometry), DELTAPERM, a Ca etching method, and the like have been developed. In the measurement of high sensitivity, however, a case where the water vapor transmission rate varies depending on an apparatus even in the same film or a case where the water vapor transmission rate varies depending on a measurement method even in the same apparatus remains at present. Therefore, there is a need for a standard sample for calibration of an apparatus that can be used commonly in water vapor transmission rate measuring apparatuses.

A standard sample for calibration of the conventional apparatus has been proposed in which the sample for calibration is connected to a water vapor detecting line of an apparatus (for example, see Patent Literature 1). The standard sample for calibration includes a tubular body made of stainless steel, a resin packed inside the tubular body, and a joint for connecting the water vapor transmission rate measuring apparatus to both ends of the tubular body.

In the literature relating to a barrier layer of package and container, the opening area and the water vapor transmission rate of the hole are in the proportional relation when the radius of the hole formed in the barrier layer is sufficiently large relative to the thickness of the base film, but the opening area and the water vapor transmission rate of the hole deviating from the proportional relation as the radius of the hole becomes smaller is known (for example, see Non Patent Literature 1).

On the other hand, as a method of forming a pattern of a metal film on a resin film, a lift-off method is known (for example, see Patent Literature 2 or 3).

Citation List

Patent Literature

Patent Literature 1: JP 2012-103151 A
Patent Literature 2: JP 62-5639 A
Patent Literature 3: JP 62-211924 A
Patent Literature 4: JP 2011-47855 A

Non Patent Literature

Non Patent Literature 1: G. Rossi and M. Nulman, "Effect of local flaws in polymeric permeation reducing barriers", J. Appl. Phys. 74, pp. 5471-5475 (1993).

Summary of Invention

Technical Problem

In the standard sample for calibration of the conventional method disclosed in Patent Literature 1, since the standard sample is the tubular body, it is necessary to provide an exclusive connection portion for attachment to the measuring apparatus for a film-like sample. Until now, no standard sample for calibration is present in the measurement of high sensitivity water vapor transmission rate of $10^{-6}$ to $10^{-3}$ g/m$^2$/day in order without the need of the exclusive connection portion, and a calibration method is not established. For this reason, with respect to a value of the water vapor transmission rate measured by various measuring methods and various measuring apparatuses, there are a problem that reliability and traceability of the measured value are not ensured. In the measurement of the water vapor transmission rate, since the film-like sample is generally installed in a chamber called a transmission cell, it is considered that the water vapor transmission rate is influenced by the difference in attachment mechanism or method. A sample for calibration is required by which evaluation including such influence can be executed.

Conventionally, many examples of employing the lift-off method at the time of preparing a semiconductor element or a magnetic storage element have been reported as disclosed in Patent Literature 2 or 3. These related arts relate to a technique for forming a plated microstructure on a base material. Until now, an example of applying the lift-off method to form a fine opening portion (small hole) having an equivalent circle radius of less than 100 $\mu$m in a plated film provided on the base material has not been reported.

An object of the present invention is to provide a standard sample for calibration that is applicable to many water vapor transmission rate measuring apparatuses without the need of an exclusive connection portion and can be used for calibration of the measuring apparatuses with an attachment mechanism similar to a general film-like sample and under measurement conditions. In addition, another object of the present invention is to provide a standard film set for calibration and a calibration method that use in combination of a plurality of standard films for calibration and can correct a value of WVTR to offset the change in water vapor transmission rate due to physical properties of an adhesive material used for bonding of the films, for example.

In addition, still another object of the present invention is to provide a production method of the standard film for calibration that can form a small hole having a size, which can be finely controlled, in the plating layer.

Solution to Problem

In order to achieve the above objects, the present inventors found that a standard sample for calibration of a water vapor transmission rate measuring apparatus has a film shape attached to the water vapor transmission rate measuring apparatus, and is a film in which a barrier layer is formed on a resin film serving as a base material to block water vapor and a small hole having a small diameter is formed in only the barrier layer, to perform calibration of the water vapor transmission rate measuring apparatus by confirmation of linearity of water vapor transmission rate through change in the number of small holes. That is, the standard film for calibration according to the present invention is characterized by being configured such that a barrier layer is provided on a resin film and the barrier layer includes at least one of small holes, and is a standard film for calibration of a water vapor transmission rate measuring apparatus for measuring water vapor transmission rate of $10^{-3}$ g/m$^2$/day or less, in which when an equivalent circle radius of the small hole is defined as R [$\mu$m] and a thickness of the resin film is defined as L [$\mu$m], a relation of R/L $\leq$ 5 is satisfied.

In the standard film for calibration according to the present invention, it is preferable that the thickness L of the resin film is 5 to 500 $\mu$m. It can be expected that repetitive durability is high and the change in water vapor transmission rate due to deterioration of the sample is small, and a plurality of apparatuses can be compared to each other. In addition, calibration accuracy can be further improved.

In the standard film for calibration according to the present invention, it is preferable that the barrier layer is a deposition layer of a metal, a metal oxide, or a silicon oxide, a metal foil, or a plating layer. Barrier properties of water vapor can be further improved and thus calibration accuracy can be further improved.

In the standard film for calibration according to the present invention, it is preferable that the small hole is provided by etching, electroforming, laser machining, or grinding. The opening area can be controlled with higher accuracy, and calibration accuracy can be further improved.

In the standard film for calibration according to the present invention, it is preferable that the small hole is provided in the form of a plurality of pieces, and a minimum equivalent circle radius of each of the small holes is in the range of 70% or more of a maximum equivalent circle radius.

In the standard film for calibration according to the present invention, it is preferable that a gap between both edges of the small holes adjacent to each other is 2L or more. Calibration accuracy can be further improved.

A standard film set for calibration according to the present invention in which the standard film for calibration according to the present invention is provided in the form of a plurality of sheets, is characterized in that the plurality of standard films for calibration are formed in combination of films having the different number of the small holes provided in a test surface, and a minimum equivalent circle radius of each of the small holes provided in the plurality of standard films for calibration is in the range of 70% or more of a maximum equivalent circle radius.

In the standard film set for calibration according to the present invention, it is preferable that at least one of the plurality of standard films for calibration is a film in which an absolute value of water vapor transmission rate is determined. It is possible to perform calibration of the absolute value in addition to calibration of increase and decrease of the value of water vapor transmission rate.

A calibration method according to the present invention is characterized by using the standard film set for calibration according to the present invention, and the method is characterized by including: a process of measuring water vapor transmission rate of each of the standard films for calibration; a process of plotting, on a double logarithmic graph, an opening area [$m^2$] and the water vapor transmission rate [$g/m^2/day$] of the small hole of each of the standard films for calibration; and a process of confirming that each plot is on a straight line having a gradient of $1 \pm 5\%$.

A production method of a standard film for calibration according to the present invention is a production method of a standard film for calibration of a water vapor transmission rate measuring apparatus for measuring water vapor transmission rate of $10^{-3}$ $g/m^2/day$ or less, the standard film for calibration being configured such that a barrier layer is provided on a resin film and the barrier layer includes at least one of small holes, the production method is characterized by including: a process 1b of forming a seed layer on a surface of the resin film; a process 2b of masking a small hole formation scheduled region on a surface of the seed layer with a resist; a process 3b of performing a plating treatment on a surface of the seed layer other than the small hole formation scheduled region and providing a plating layer serving as the barrier layer; and a process 4b of removing the resist provided on the small hole formation scheduled region and the seed layer immediately below the resist, wherein the small hole has an equivalent circle radius of less than 100 $\mu$m.

In the production method of the standard film for calibration according to the present invention, it is preferable that the seed layer in the process 1b is an electroless plating layer. The seed layer can be more reliably removed.

A production method of a standard film for calibration according to the present invention is a production method of a standard film for calibration of a water vapor transmission rate measuring apparatus for measuring water vapor transmission rate of $10^{-3}$ $g/m^2/day$ or less, the standard film for calibration being configured such that a barrier layer is provided on a resin film and the barrier layer includes at least one of small holes, the production method is characterized by including: a process 1a of masking a small hole forming region on a surface of the resin film with a resist; a process 2a of forming a seed layer on a surface of the resist and on a surface of the resin film around the resist; a process 3a of removing the resist in a lift-off manner together with the seed layer on the surface of the resist; and a process 4a of performing a plating treatment on a surface of the seed layer remaining on the surface of the resin film and providing a plating layer serving as the barrier layer having the small hole, wherein the small hole has an equivalent circle radius of less than 100 $\mu$m.

In the production method of the standard film for calibration according to the present invention, it is preferable that when an equivalent circle radius of the small hole is defined as R [$\mu$m] and a thickness of the plating layer is defined as T [$\mu$m], a relation of $R/T < 3$ is satisfied. It is possible to obtain a standard film for calibration more suitable for calibration in the region having a smaller water vapor transmission rate (for example, $10^{-5}$ $g/m^2/day$ or less).

Advantageous Effects of Invention

The present invention can provide a standard sample for calibration that is applicable to many water vapor transmission rate measuring apparatuses without the need of an exclusive connection portion and can be used for calibration of the measuring apparatuses with an attachment mechanism similar to a general film-like sample and under measurement conditions. The present invention can provide a standard film set for calibration and a calibration method that use in combination of a plurality of standard films for calibration and can correct a value of WVTR to offset the change in water vapor transmission rate due to physical properties of an adhesive material used for bonding of the films, for example.

Since the standard film for calibration according to the present invention has a film shape, it is applicable to many water vapor transmission rate measuring apparatuses. In addition, with respect to the installation method or measurement conditions of the sample, the measurement can be performed under the same conditions as those in the general film measurement. Since repetitive durability is high as compared to a general barrier film, it can be expected that the change in water vapor transmission rate due to deterioration of the sample is small, and a plurality of apparatuses can be compared to each other. As compared to a pinhole or the like of the barrier film, since the size of the small hole is large and the structure is simple, it can be expected that a measurement time is also shortened. The standard film set for calibration and the calibration method according to the present invention correct a value of WVTR by a plurality of samples and thus can offset the change in water vapor transmission rate due to physical properties of an adhesive material used for bonding of the films, for example.

In addition, the present invention can provide a production method of a standard film for calibration that can form a small hole having a size, which can be finely controlled, in the plating layer.

Brief Description of Drawings

Fig. 1 is a schematic cross-sectional view of a first example of a standard sample for calibration according to the present embodiment.

Fig. 2 is a schematic top view of a first example of the standard sample for calibration according to the present embodiment when viewed from a barrier layer side.

Fig. 3 is a schematic cross-sectional view of a second example of a standard sample for calibration according to the present embodiment.

Fig. 4 is a schematic top view of a second example of the standard sample for calibration according to the present embodiment when viewed from a barrier layer side.

Fig. 5 is a schematic diagram illustrating an example of a calibration method according to the present embodiment.

Fig. 6 is a flowchart illustrating the calibration method according to the present embodiment.

Fig. 7 is a graph of Examples.

Fig. 8 is a diagram illustrating a production method of a standard film for calibration according to a first embodiment.

Fig. 9 is a diagram illustrating a production method of a standard film for calibration according to a second embodiment.

Description of Embodiments

Next, the present invention will be described in detail with reference to embodiments, but the present invention is not construed as being limited to such a description. As long as the effect of the present invention can be achieved, embodiments may be variously modified.

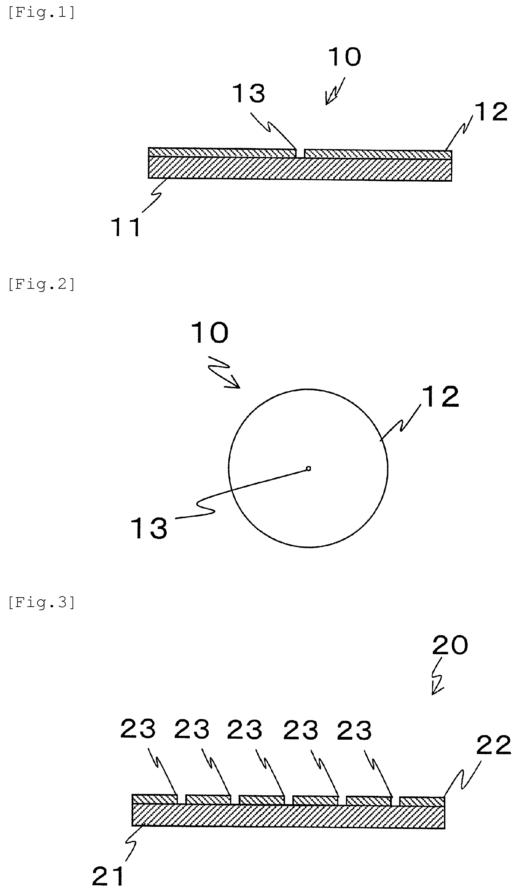

Fig. 1 is a cross-sectional view illustrating schematically a first example of a standard sample for calibration according to an embodiment of the present invention. Fig. 2 is a top view illustrating schematically a first example of the standard sample for calibration of the present embodiment. A standard film for calibration 10 according to the present embodiment is configured such that a barrier layer 12 is provided on a resin film 11, the barrier layer 12 includes at least one small hole 13, and is a standard film for calibration of a water vapor transmission rate measuring apparatus for measuring water vapor transmission rate of $10^{-3}$ g/m$^2$/day or less, in which when an equivalent circle radius of the small hole 13 is defined as R [$\mu$m] and a thickness of the resin film 11 is defined as L [$\mu$m], a relation of R/L ≤ 5 is satisfied. In this description, the equivalent circle radius refers to an equal-area equivalent radius. In this description, the water vapor transmission rate (WVTR) refers to water vapor transmission rate in a steady state, unless otherwise specified, refers to water vapor transmission rate determined in conformity to JIS K 7129: 2008 "Plastics - Film and sheeting - Determination of water vapor transmission rate (Instrumental method)" or ISO 15106-5, -6, and -7: 2015 "Plastics - Film and sheeting - Determination of water vapor transmission rate". Unless otherwise disclosed, conditions are that a temperature was 25°C and relative humidity was 50% RH.

The resin film 11 is a base material which holds the barrier layer 12. The resin film 11 is not particularly limited as long as it can hold the barrier layer, but is preferably made of organic materials or organic-inorganic hybrid materials. For example, the resin film 11 includes a plastic film such as acrylic acid ester, methacrylic acid ester, polyethylene terephthalate (PET), polybutylene terephthalate, polyethylene naphthalate (PEN), polycarbonate (PC), polyacrylate, polyvinyl chloride (PVC), polyethylene (PE), polypropylene (PP), polystyrene (PS), nylon (Ny), aromatic polyamide, polyetherether ketone, polysulfone, polyethersulfone, polyimide, or polyether imide; heat resistant transparent films each having silsesquioxane as a base skeleton, which has an organic inorganic hybrid structure (product name Sila-DEC, produced by Chisso Corporation); and layered films in which at least two layers of the plastic film are laminated. Polyethylene terephthalate (PET), polybutylene terephthalate, polyethylene naphthalate (PEN), polycarbonate (PC), PCTFE (Poly Chloro Tri Furuoro Ethylene), and the like are preferably usable in view of cost and commercial availability. In addition, heat resistant transparent films each having silsesquioxane as a base skeleton, which has an organic inorganic hybrid structure are preferably usable in view of optical transparency, heat resistance, and adhesion to an inorganic layer. In the present invention, coefficient of thermal expansion of the resin film 11 is not particularly limited, but is preferably equal to the coefficient of thermal expansion of the barrier layer 12 or is in the range of 80 to 120% of the coefficient of thermal expansion of the barrier layer 12. When the resin film 11 and the barrier layer 12 have the same or the smaller difference in coefficient of thermal expansion, it is possible to prevent stripping between the resin film 11 and the barrier layer 12 by thermal expansion or thermal shrinkage.

The thickness L [$\mu$m] of the resin film 11 is preferably 5 to 500 $\mu$m, more preferably 20 to 300 $\mu$m, and further preferably 50 to 250 $\mu$m. When the resin film 11 exceeds 500 $\mu$m, an opening area of the small hole 13 becomes too large, and thus a proportional relation between the opening area of the small hole and a water vapor transmission rate may not be satisfied. When the thickness of the resin film 11 is less than 5 $\mu$m, repetitive durability may be insufficient. From the viewpoint of improvement in handling property and prevention of unintended leak during measurement, the thickness of the resin film 11 is preferably 20 $\mu$m or more. When the thickness of the resin film 11 is within the above range, the repetitive durability becomes high, the change in water vapor transmission rate due to deterioration of the sample can be expected to be small, and a plurality of apparatuses can be compared with each other. In addition, calibration accuracy can be further improved.

The shape and dimension of the resin film 11 can be adjusted to specifications of a measuring apparatus that performs calibration; for example, an exterior shape is a circular shape having a diameter of 100 mm, and a test surface is in the form of a circular shape having a diameter of 80 to 90 mm.

The barrier layer 12 is preferably a deposition layer of a metal, a metal oxide, or a silicon oxide, a metal foil, or a plating layer. As barrier properties of water vapor become higher, the calibration accuracy can become higher. The barrier layer 12 preferably covers a part or entire of any surface of the resin film 11. For example, the form where the barrier layer 12 covers a part of any surface of the resin film 11 is a form where the barrier layer 12 is provided in only at least a region which is a test surface of the standard film for calibration and is not provided in a region which is a portion attached to an apparatus. More preferably, the barrier layer 12 covers the entire of any surface of the resin film 11.

When the barrier layer 12 is a deposition layer, the deposition layer is formed by, for example, a physical vapor deposition or a chemical vapor deposition method. The metal is, for example, aluminum, chromium, zinc, gold, silver, copper, nickel, or titanium. The metal oxide is, for example, aluminum oxide, titanium oxide, zirconium oxide, or silicon oxide. The thickness of the deposition layer is preferably 5 to 30 $\mu$m, and more preferably 10 to 20 $\mu$m. The present invention is not limited to the deposition methods and the material and thickness of the deposition layer.

When the barrier layer 12 is a metal foil, the metal foil is, for example, an aluminum foil or a copper foil. The thickness of the metal foil is preferably 10 to 50 $\mu$m and more preferably 10 to 30 $\mu$m in view of the repetitive durability. The present invention is not limited to the material and the thickness of the metal foil. When the barrier layer 12 is the metal foil, the metal foil can be bonded to the resin film 11 using an adhesive, for example.

When the barrier layer 12 is a plating layer, plating layer is formed, for example, an electroplating method, an electroless plating method, or a hot dip galvanizing method. A type of plating material is, for example, gold, silver, copper, zinc, tin, chromium, nickel, or titanium. The thickness of the plating layer is preferably 5 to 30 $\mu$m, and more preferably 10 to 20 $\mu$m. The present invention is not limited to the plating method, the material and thickness of the plating layer.

The small hole 13 is a through hole that passing through the barrier layer 12. The shape of the small hole 13 is a circular shape, an elliptical shape, a triangular shape, or a polygonal shape such as a rectangular shape when is viewed in a plan from the surface of the barrier layer 12 opposite to of the resin film 11 side, in which the circular shape is preferred and a perfectly circular shape is more preferred.

The small hole 13 is provided in a region which serves as the test surface out of the surface of the barrier layer 12. The region serving as the test surface is, for example, a central portion of the barrier layer 12.

The small hole 13 is preferably provided by etching, electroforming, laser machining, or polishing. When the barrier layer 12 is the deposition layer, the small hole 13 can be processed by wet or dry etching. When the barrier layer 12 is the metal foil, the small hole 13 can be processed by wet or dry etching. At this time, the metal foil may be bonded to the resin film 11 after the small hole 13 is formed in the metal foil, or the small hole 13 may be formed after the metal foil is bonded to the resin film 11. When the barrier layer 12 is the plating layer, the small hole 13 can be processed by electroforming. At this time, a mask is applied to a portion of the resin film 11 on which the small hole 13 is formed, a plating layer is formed by electroforming, and thus the small hole 13 is formed.

The number of small holes 13 is arbitrary depending on sensitivity of the measuring apparatus or a required water vapor transmission rate, and may be one or more. The upper limit of the number of small holes is not particularly limited, but, for example, is preferably 100 or less, more preferably 50 or less, further more preferably 10 or less, and particularly preferably 5 or less. In Figs. 1 and 2, one small hole 13 is illustrated as a first example. In Figs. 3 and 4, 25 small holes 23 are illustrated as a second example.

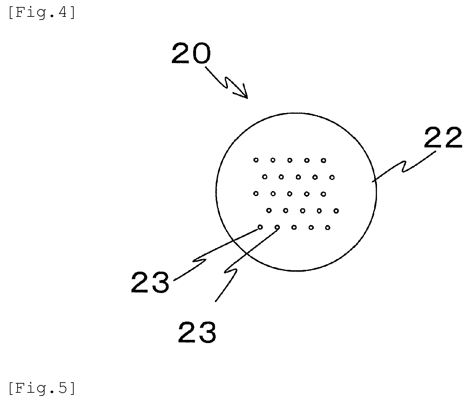

As illustrated in Figs. 3 and 4, when a plurality of small holes 23 are provided, a gap between both edges of the small holes 23 adjacent to each other is preferably 2L or more. In this description, the gap between both edges of the small holes 23 adjacent to each other means a shortest distance between outer peripheral edges of the small holes 23 adjacent to each other. When the gap between both of the small holes 23 is shorter than 2L, there are cases where water vapor concentration distributions in the vicinity of both of the small holes interfere with each other in a steady state and thus the water vapor transmission rate varies. The gap between both of the small holes 23 adjacent to each other is preferably 3L or longer. The upper limit of the gap between both of the small holes 23 adjacent to each other is not particularly limited, but is preferably distributed in a central portion inside the test surface in a uniform manner.

An equivalent circle radius R [$\mu$m] of the small hole 13 is appropriately selected depending on the thickness L [$\mu$m] of the resin film 11. For example, when the thickness L of the resin film 11 is 100 $\mu$m, the equivalent circle radius R of the small hole 13 is preferably 500 $\mu$m (0.5 mm) or less, and more preferably 400 $\mu$m (0.4 mm) or less. The lower limit of the equivalent circle radius R of the small hole 13 is not particularly limited as long as can be processed, but, for example, is preferably 0.01 $\mu$m or more and more preferably 1 $\mu$m or more. In this description, the equivalent circle radius of the small hole 13 means an equivalent circle radius of such a small hole when one small hole 13 is present and means an equivalent circle radius of each small hole 13 when a plurality of the small holes 13 are present. In addition, when the plurality of small holes 13 are present, the minimum equivalent circle radius of the small hole 13 is preferably in the range of 70% or more of the maximum equivalent circle radius. The minimum equivalent circle radius of the small hole 13 is more preferably in the range of 75% or more of the maximum equivalent circle radius, and particularly preferably in the range of 80% or more. In addition, the opening area of the small hole 13 means an area of an opening portion of the small hole 13 on the barrier layer 12 at the surface of the resin film 11 side. That is, in other words, the opening area of the small hole 13 means an area of a portion in which the surface serving as the test surface of the resin film 11 is not covered with the barrier layer 12. When the plurality of small holes 23 are present, the opening area of the small hole 23 is a total area of the plurality of small holes 23.

The equivalent circle radius R [μm] of the small hole 13 and the thickness L [μm] of the resin film 11 satisfies the relation of R/L ≤ 5. In Equation (13) of Non patent Literature 1, when the radius of the hole formed in the barrier layer is sufficiently small with respect to the thickness of the base-material film, $Q (L, R) = 4DR\Phi_0$ (in Non patent Literature 1, Q represents a flux in the small hole, L represents a thickness of the base material, R represents a radius of the hole, D represent a transmission diffusion coefficient, and $\Phi_0$ represents an equilibrium concentration) is disclosed; and, in Equation (15) of Non patent Literature 1, when the radius of the hole formed in the barrier layer is sufficiently large with respect to the thickness of the base-material film, $Q (L, R) = D (\pi R^2/L)\Phi_0$ is disclosed. Then, by substitution of Equation (13) by Equation (15), when a relation of $4DR\Phi_0 = D(\pi R^2/L)\Phi_0$ is obtained, it is considered to be $R/L = 4/\pi(\approx 1.27)$. For this reason, when a value of R/L is equal to or greater than $4/\pi$, it is expected to be applicable to Equation (15). However, from FIG. 4 in Non Patent Literature 1, as the value of R/L becomes smaller, a plot deviates from a graph of Equation (15). The plot starts to deviate from the graph of Equation (15) in the vicinity of R/L = 5. From this, in the case of R/L ≤ 5, since the opening area and the water vapor transmission rate of the small hole 13 deviate from a proportional relation, it is not possible to perform calibration by the change of the opening area of the hole. Therefore, the present inventors found that the calibration could be performed even in the range of 5 or less (R/L ≤ 5) when the standard film for calibration 10 or 20 having different small holes 13 of the same area was formed in combination of a plurality of sheets. In this description, the value of R/L is more preferably 3 or less (R/L ≤ 3), and particularly preferably 2 or less (R/L ≤ 2).

The standard film for calibration according to the present embodiment is a standard film for calibration of a water vapor transmission rate measuring apparatus that is configured to measure a water vapor transmission rate of $10^{-3}$ g/m$^2$/day or less. Here, the water vapor transmission rate is more preferably $10^{-4}$g/m$^2$/day or less. For example, in the case of employing the standard film for calibration 10 formed in such a manner that an aluminum foil as the barrier layer 12, in which one small hole 13 is formed, having a diameter of 0.1 mm (radius of 50 μm) and a thickness of 30 μm, is bonded to a PET film as the resin film 11 in which the exterior shape has a diameter of 100 mmϕ, a test surface has a diameter of 80 mmϕ, and a thickness is 100 μm, the WVTR is $4 \times 10^{-5}$ to $7 \times 10^{-5}$ g/m$^2$/day under conditions of a temperature of 40°C and a relative humidity of 90% RH. Examples of methods of performing the calibration such that the WVTR is $10^{-4}$ g/m$^2$/day or less include a method of increasing the area of the test surface of the standard film for calibration (for example, the diameter is 264 mmϕ or more), a method of using a film having the high water vapor transmission rate (for example, PCTFE) as the resin film, and a method of reducing the equivalent circle radius of the small hole (for example, 20 μm or less).

A standard film set for calibration according to the present embodiment is provided with a plurality of sheets of the standard films for calibration 10 and 20 according to the present embodiment, the plurality of sheets of the standard films for calibration 10 and 20 are formed in combination of films having the different number of the small holes 12 and 23 provided in the test surface, and the minimum equivalent circle radius of each of the small holes 13 and 23 provided in the plurality of sheets of standard films for calibration 10 and 20 is in the range of 70% or more of the maximum equivalent circle radius. Here, the minimum value and the maximum value of the equivalent circle radius are obtained with the small holes in the total films of the standard film set for calibration as a target. Then, when the minimum value and the maximum value of the equivalent circle radius are obtained with the small holes in the total films of the standard film set for calibration, it is said that the minimum value of the equivalent circle radius is in the range of 70% or more of the maximum value thereof. The number of sheets of the standard films for calibration 10 and 20 is not particularly limited, but is preferably 2 to 20 sheets and more preferably 5 to 10 sheets.

The plurality of sheets of standard films for calibration 10 and 20 preferably includes, for example, the first film 10 in which the number of small holes 13 is "n" (where, n is an integer equal to or greater than 1) and the second film 20 in which the number of small holes 23 is "m" (where, m is an integer greater than n). For example, the first film 10 is the standard film for calibration illustrated in Figs. 1 and 2. In Figs. 1 and 2, as an example, one small hole 13 is present, but the number "n" of small holes 13 is not limited thereto, but may be 2 or more. For example, the second film 20 is the standard film for calibration illustrated in Figs. 3 and 4. In Figs. 3 and 4, as an example, 25 small holes 23 are present, but the number "m" of small holes 23 may be any integer greater than the number "n" of small holes 13 of the first film 10, and the present invention is not limited thereto.

In the standard film set for calibration according to the present embodiment, at least one of the plurality of standard films for calibration 10 and 20 is preferably a film that the absolute value of the water vapor transmission rate is determined. The film that the absolute value of the water vapor transmission rate is determined is a standard film for calibration, and may be a previously calibrated film that the absolute value of the water vapor transmission rate is measured by the measuring apparatus, for example, a film in which the several small holes 23 are present and when assuming one virtual hole having an opening area of the small hole 23 (total of the areas of the openings of the small holes 23), the virtual hole has an equivalent circle radius X satisfying the relation of X/L ≥ 5.75.

Next, a calibration method using the standard film set for calibration according to the present embodiment will be described. Fig. 5 is a schematic diagram illustrating an example of a calibration method according to the present embodiment. With reference to Fig. 5, the calibration method will be described using, as an example, the standard film set for calibration according to the present embodiment including the first film 10 and the second film 20 serving as a standard film for calibration. The calibration method according to the present embodiment includes a process of measuring a water vapor transmission rate of each of the standard films for calibration 10 and 20, a process of plotting, on a double logarithmic graph, the opening area [$m^2$] and the water vapor transmission rate [$g/m^2/day$] of the small hole of each of the standard films for calibration 10 and 20, and a process of confirming that each plot is on a straight line having a gradient of $1 \pm 5\%$. More specifically, as illustrated in Fig. 5, a plot 10 of the first film 10 and a plot 20 of the second film 20 are plotted on the double logarithmic graph of the opening area and the water vapor transmission rate of the small hole, and a line g1 connecting the plot 10 and the plot 20 is drawn. Whether the water vapor transmission rates ($WVTR_{10}$, $WVTR_{20}$) of the first film 10 and the second film 20 has formed a proportional relation (each plot is on the straight line having the gradient of $1 \pm 5\%$ (the gradient is in the range of 0.95 to 1.05)) with respect to the opening areas ($S_{10}$, $S_{20}$) will be confirmed. The numerical value of $\pm 5\%$ is an allowable range of measurement error for a gradient of 1.

Although the opening area and the water vapor transmission rate of the hole are in proportional relation in the relation of R/L > 5 as illustrated in a graph g2 in Fig. 5, since the opening area and the water vapor transmission rate of the small hole 13 deviate from the proportional relation when satisfying the relation of R/L ≤ 5 as illustrated in a graph g3 in Fig. 5, it is difficult to calculate the water vapor transmission rate from the opening area. Since the opening area of the small hole 13 is changed when the number of small holes 13 having a small diameter, which satisfies the relation of R/L ≤ 5, is changed in the standard film set for calibration according to the first embodiment, the opening area of the small hole 13 of the standard film for calibration and the water vapor transmission rate of the standard film for calibration has the proportional relation having the gradient of $1 \pm 5\%$ in the double logarithmic graph as illustrated in the graph g1 in Fig. 5. By these operations, it can be confirmed in the apparatus that a detection value also correctly increases or decreases as the water vapor transmission rate increases or decreases. In addition, since the standard film for calibration includes the film that the absolute value of the water vapor transmission rate is determined, it is possible to perform calibration of the absolute value in addition to the calibration of the increase or decrease of the water vapor transmission rate.

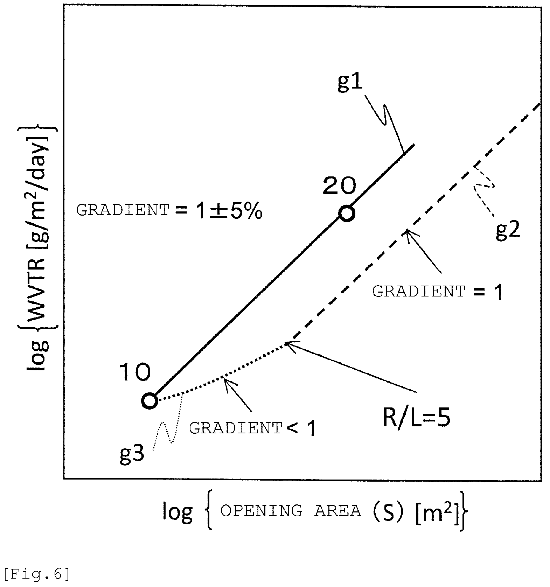

Fig. 6 is a flowchart illustrating the calibration method according to the present embodiment. In the calibration method according to the present embodiment, as illustrated in Fig. 6, the water vapor transmission rate $WVTR_{10}$ of the first film 10 and the water vapor transmission rate $WVTR_{20}$ of the second film 20 are measured, and the measured values may be confirmed to satisfy Formula 1.

[Formula 1]

$$\frac{\log(WVTR_{20}) - \log(WVTR_{10})}{\log(S_{20}) - \log(S_{10})} = a$$

In Formula 1, "a" represents $1 \pm 5\%$.

When the equivalent circle radius R of the small hole is sufficiently small relative to the thickness L of the resin film (for example, when being R/L ≤ 0.4), a plurality of films are prepared in which the equivalent circle radius of one small hole is changed, it is confirmed that the opening area and the water vapor transmission rate of the small hole have a gradient of $1/2 \pm 5\%$ in the double logarithmic graph, and then the calibration may be performed.

Next, an example of a production method of the standard film for calibration according to the present embodiment will be described. The production method described herein includes a method of applying a lift-off method (first embodiment) and a method of using an etching method (second embodiment). The production method according to the first embodiment and the second embodiment is particularly effective to make the equivalent circle radius of the small hole to be less than 100 $\mu$m. The equivalent circle radius of the small hole is more preferably 50 $\mu$m or less. The lower limit of the equivalent circle radius of the small hole is not particularly limited as long as can be processed, but, for example, is preferably 0.1 $\mu$m or more, and more preferably 1 $\mu$m or more.

First, the first embodiment will be described. The method of the first embodiment differs from a conventional lift-off method in that the conventional lift-off method is to form a plated microstructure on a base material, whereas the method of the first embodiment is to form a fine opening portion (small hole) having the equivalent circle radius of less than 100 $\mu$m in a plated film which is provided on a base material.

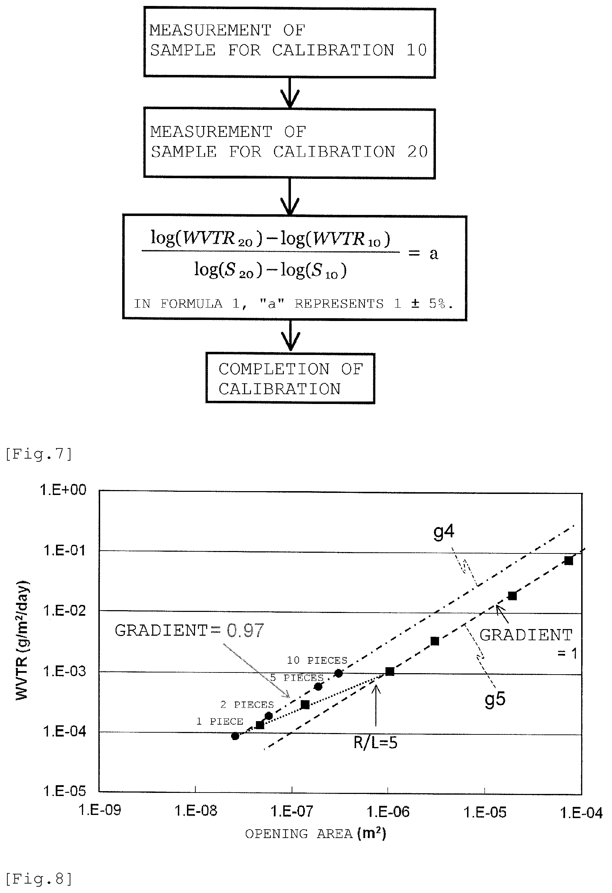

Fig. 8 is a diagram illustrating the production method of the standard film for calibration according to the first embodiment. The production method of the standard film for calibration according to the first embodiment is a production method of a standard film for calibration of a water vapor transmission rate measuring apparatus for measuring water vapor transmission rate of $10^{-3}$ g/m$^2$/day or less, the standard film for calibration being configured such that a barrier layer 32 is provided on a resin film 31 and the barrier layer 32 includes at least one of small holes 33, and the production method includes: a process 1a (masking process) of masking a small hole forming region 33a on the surface of the resin film 31 with a resist 34; a process 2a (seed layer forming process) of forming seed layers 35 (35a, 35b) on the surface of the resist 34 and on the surface of the resin film 31 around the resist 34; a process 3a (lift-off process) of removing the resist 34 in a lift-off manner together with the seed layer 35b on the surface of the resist 34; and a process 4a (plating treatment process) of performing a plating treatment on the surface of the seed layer 35a remaining on the surface of the resin film 31 and providing a plating layer serving as the barrier layer 32 having the small hole 33, the small hole 33 having an equivalent circle radius of less than 100 $\mu$m.

The process 1a (masking process) will be described. A pattern of the resist 34 is formed using, for example, a photolithography technique. The pattern of the resist 34 is appropriately designed according to the size and shape of the small hole 33 to be formed and the number of small holes. For example, in order to form the small hole 33 having the equivalent circle radius of 50 $\mu$m, the pattern of the resist 34 is preferably formed into a columnar shape having a radius of 50 $\mu$m and a height (thickness) of 30 $\mu$m or more. Furthermore, in the case of providing several numbers (for example, n numbers (n is an integer equal to or greater than 2) of small holes 33, n patterns of the resist 34 are provided.

The process 2a (seed layer forming process) will be described. The seed layer 35 (35a, 35b) is formed on the resist 34 and on the resin film 31 around the resist 34. A method of forming the seed layer 35 is not particularly limited, but includes, for example, an ion plating method, a sputtering method, or an electroless plating method. The thickness of the seed layer 35 is not particularly limited, but is preferably 0.1 to 0.5 $\mu$m. In addition, the seed layer 35 may be either of a single structure or a layered structure. A specific example of the seed layer 35 being the layered structure is a two-layered structure disposed sequentially with a layer made of Ti and a layer made of Cu from the resin film 31. The present invention is not limited to this structure.

The process 3a (lift-off process) will be described. In the lift-off process, the resist 34 is dissolved and expanded to be removed using, for example, a resist stripping solution and the seed layer 35b formed on the resist 34 is removed at the same time. By the lift-off process, a layered body is obtained in which the seed layer 35a having an opening in the small hole forming region 33a is layered on the resin film 31.

The process 4a (plating treatment process) will be described. In the plating treatment process, the layered body obtained in the lift-off process is subjected to a plating treatment. The barrier layer (plating layer) 32 is formed only on the conductive seed layer 35a, but is not formed on the small hole forming region 33a to which the insulating resin film 31 is exposed. Then, a plating resin film with small hole (standard film for calibration according to the present embodiment) 30 is obtained in which the plating layer 32 having the small hole 33 is layered on the resin film 31 through the seed layer 35a interposed therebetween. The thickness of the plating layer 32 is preferably 5 to 30 $\mu$m, and more preferably 10 to 20 $\mu$m. With respect to the plating treatment, the plating layer 32 may be formed to have a desired thickness by one plating treatment, or the plating layer 32 may be formed to have a desired thickness by two or more times of the plating treatment. In this embodiment, the plating treatment is preferably performed two or more times. For this reason, the plating layer 32 is formed more densely, and thus barrier properties can be further improved.

In the production method of the standard film for calibration according to the first embodiment, the method preferably includes a washing process of washing the surface of the resin film 31 side on which the plating layer 32 is provided, prior to the masking process. In the washing process, a polyethylene terephthalate (PET) film is wiped off using an organic solvent such as acetone, ethanol, or isopropyl alcohol. By the washing process, it is possible to further uniformly form the seed layer 35, and to prevent an unintended pinhole from occurring in portions other than the small hole 33 of the plating layer 32.

Subsequently, the second embodiment will be described. The method of the second embodiment differs from a conventional etching method in that the conventional etching method is to form a plated microstructure on a base material, whereas the method of the second embodiment is to form a fine opening portion (small hole) having the equivalent circle radius of less than 100 $\mu$m in a plated film which is provided on a base material. In order to form the fine opening portion (small hole), the production method according to the second embodiment is more difficult to etch as compared with the conventional etching method and thus is necessary to contrive the use of materials easy to perform the etching, the optimization of etching conditions such as temperature conditions, or the like.

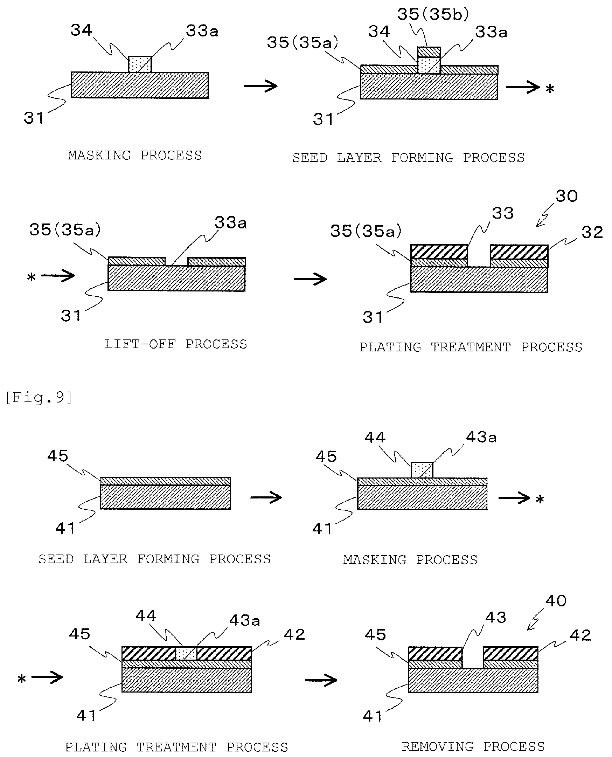

Fig. 9 is a diagram illustrating the production method of the standard film for calibration according to the second embodiment. The production method of the standard film for calibration according to the second embodiment is a production method of a standard film for calibration of a water vapor transmission rate measuring apparatus for measuring water vapor transmission rate of $10^{-3}$ g/m$^2$/day or less, the standard film for calibration being configured such that a barrier layer 42 is provided on a resin film 41 and the barrier layer 42 includes at least one of small holes 43, and the production method includes: a process 1b (seed layer forming process) of forming a seed layer 45 on the surface of a resin film 41; a process 2b (masking process) of masking a small hole formation scheduled region 43a on the surface of the seed layer 45 with a resist 44; a process 3b (plating treatment process) of performing a plating treatment on the surface of the seed layer 45 other than the small hole formation scheduled region 43a and providing a plating layer serving as the barrier layer 42; and a process 4b (removing process) of removing the resist 44 provided on the small hole formation scheduled region 43a and the seed layer 45 immediately below the resist 44, the small hole 43 having an equivalent circle radius of less than 100 $\mu$m.

The process 1b (seed layer forming process) will be described. The seed layer 45 is formed on the surface of the resin film 41. A formation method, a thickness, and a structure of the seed layer 45 are similar to those in the process 2a. In the second embodiment, the seed layer 45 is preferably an electroless plating layer. The electroless plating layer is, for example, an electroless nickel plating layer or an electroless copper plating layer, and more preferably the electroless copper plating layer. In the process 4b (removing process) to be performed later, the seed layer 45 can be more reliably removed.

The process 2b (masking process) will be described. The resist 44 is formed in the small hole formation scheduled region 43a on the surface of the seed layer 45. A formation method and a pattern of the resist 44 are similar to those in the process 1a.

The process 3b (plating treatment process) will be described. The plating layer 42 is formed on the seed layer 45 around the resist 44. A method of the plating treatment and a thickness of the plating layer 42 are similar to those in the process 4a.

The process 4b (removing process) will be described. The removing process successively includes a process 4b1 of removing the resist 44 provided on the small hole formation scheduled region 43a and a process 4b2 of removing the seed layer 45 immediately below the resist 44 which is removed in the process 4b1.

In the process 4b1, the resist 44 is dissolved or expanded to be removed using, for example, a resist stripping solution.

In the process 4b2, the seed layer 45, which is exposed by the removal of the resist 44 in the process 4b1, is removed. In the process 4b2, the seed layer 45 is preferably removed by etching. The etching may be wet etching or dry etching. In the case of the wet etching, as an etchant, a ferric chloride solution, a cupric chloride solution, or the like is preferably used for etching of a Cu layer of the seed layer 45. More preferably, the ferric chloride solution is used. The concentration of ferric chloride is usually 10 to 45 mass%, and more preferably 30 to 40 mass%. A hot sulfuric acid, a hot nitric acid, a hydrofluoric acid-based etchant, a hydrogen peroxide-based etchant, or the like is preferably used for etching of a Ti layer of the seed layer 45. More preferably, hydrogen peroxide-based etchant is used. A temperature of the etchant during the etching of the Ti layer is preferably 30°C or higher, and more preferably 40°C or higher. By the etching at the high temperature, the seed layer 45 can be more reliably removed.

In the production method of the standard film for calibration according to the first embodiment and the second embodiment, when the equivalent circle radius of the small holes 33 and 43 is R [$\mu$m] and the thickness of the plating layers 32 and 42 is T [$\mu$m], the value of R/T is preferably 3 or less (R/T < 3). It is possible to use as a standard film for calibration more suitable for calibration in the region having a smaller water vapor transmission rate (for example, $10^{-5}$ g/m$^2$/day or less). The value of R/T is more preferably less than 1. The lower limit value of the R/T is not particularly limited, but is preferably 0.001 or more, and more preferably 0.01 or more.

In the production method according to the first embodiment and the second embodiment, the fine small hole 33 or 43 having the equivalent circle radius of less than 100 $\mu$m can be processed in the plating layer 32 or 42. In addition, the plating layer 32 to be formed blocks substantially a gas such as water vapor or oxygen. Here, the meanings of "blocking substantially the water vapor" represents that the water vapor transmission rate (WVTR) of the portion of the plating layer 32 or 42 which is not formed with the small hole 33 or 43 is less than $10^{-6}$ g/m$^2$/day. In addition, the meanings of "blocking substantially the oxygen" represents that an oxygen transmission rate (OTR) of the portion of the plating layer 32 or 42 which is not formed with the small hole 33 or 43 is less than $10^{-3}$ cm$^3$/m$^2$/day. Here, the oxygen transmission rate (OTR) is a value determined under a temperature condition of 23°C in conformity to JIS K 7126-1 or -2: 2006 "Plastic-Film and sheeting - Determination of gas-transmission rate". Then, the resulting standard film for calibration 30 or 40 can substantially block the gas such as the water vapor or oxygen by the plating layer 32 or 42 and can control the transmission amount of the gas such as the water vapor or oxygen by control of the size of the small hole 33 or 43.

Using these characteristics, the standard film for calibration obtained by the production method according to the present embodiment can be used as, for example, a gas flow filter in addition to calibration use for the water vapor transmission rate measuring apparatus. The gas flow filter is a filter, in which a flow rate is uniquely determined by a pressure condition at the time of introduction of a standard mixture gas into a vacuum chamber, such as a "microporous filter" disclosed in Patent Literature 4.

[Examples]

Next, the present invention will be described in more detail with reference to Examples, but the present invention is not limited to these Examples.

(Experimental Example 1-1)

(Production of standard film for calibration)

A standard film for calibration A was a film obtained in such a manner that a polyethylene terephthalate (PET) film having a thickness of 100 $\mu$m, which was a resin film, was bonded to an aluminum foil having a thickness of 30 $\mu$m, which was a barrier layer, using an adhesive material. One small hole of a circular shape was formed in the barrier layer of the standard film for calibration by wet etching. An opening area of the small hole of the standard film for calibration A was indicated in Table 1, and an equivalent circle radius thereof was indicated in Table 2. A measurement position of the opening area of the small hole was set to be a lowest portion of the barrier layer (that is, a surface of the barrier layer on the resin film side, and an adhesive-material-exposed surface in this Experimental Example). At this time, a water vapor transmission rate was about $1 \times 10^{-4}$ g/m$^2$/day under conditions that a temperature was 40°C and relative humidity was 90% RH.

(Production of standard film set for calibration)

Three types of standard films for calibration (multi-hole sample for calibration) formed with two, five, and ten small holes of the circular shape were prepared, and were referred to as standard films for calibration B, C, and D, respectively. These films were combined with the standard film for calibration A, whereby a standard film set for calibration was made. Opening areas of the small holes of the standard films for calibration B, C, and D were indicated in Table 1, and equivalent circle radii thereof were indicated in Table 2.

[Table 1]

| Opening area of small hole[m$^2$] | | | |
|---|---|---|---|
| Stardard film for calibration A | Standard film for calibration B | Standard film for calibration C | Standard film for calibration D |
| 2.44377E-08 | 2.88341E-08 | 3.55494E-08 | 2.36925E-08 |
| | 2.79227E-08 | 3.59657E-08 | 2.8443E-08 |
| | | 3.85868E-08 | 2.82683E-08 |
| | | 3.80505E-08 | 2.87267E-08 |
| | | 3.73299E-08 | 2.65845E-08 |
| | | | 3.62279E-08 |
| | | | 3.20481E-08 |
| | | | 3.19857E-08 |
| | | | 3.27768E-08 |
| | | | 3.22061E-08 |

[Table 2]

| Equivalent circle radius of small hole [$\mu$m] | | | |
|---|---|---|---|
| Standard film tor calibration A | Standard film for calibration B | Standard film tor calibration C | Standard film for calibration D |
| 88.22 | 95.83 | 106.40 | 86.86 |
| | 94.30 | 107.02 | 95.17 |
| | | 110.85 | 94.88 |
| | | 110.08 | 95.65 |
| | | 109.03 | 92.01 |
| | | | 107.41 |

(continued)

| Equivalent circle radius of small hole [$\mu$m] | | | |
|---|---|---|---|
| Standard film tor calibration A | Standard film for calibration B | Standard film tor calibration C | Standard film for calibration D |
| | | | 101.03 |
| | | | 100.93 |
| | | | 102.17 |
| | | | 101.28 |

(Measurement of WVTR)

With respect to each of the standard films for calibration, a WVTR was measured by a water vapor transmission rate measuring apparatus that used API-MS or CRDS (Cavity Ring Down Spectroscopy) as a detector. Measurement conditions were that a temperature was 40°C and relative humidity at a water vapor supply side was 90%. Fig. 7 illustrated a graph g4 in which the water vapor transmission rate and the opening area for the standard films for calibration A to D were plotted. As illustrated in Fig. 7, it was confirmed that a gradient was 0.97 in the standard films for calibration in which the number of small holes were formed in order of 1, 2, 5, and 10, and the water vapor transmission rate and the opening area was in the proportional relation in the error range of $\pm$5% relative to the gradient of 1. In addition, the calibration of the water vapor transmission rate was established up to about $1 \times 10^{-4}$ g/m$^2$/day by the use of this standard film for calibration.

(Confirmation evaluation)

The relation between the R/L and the proportional relation between the water vapor transmission rate and the opening area of the small hole was confirmed. Six samples were prepared in such a manner that a polyethylene terephthalate (PET) film having a thickness of 100 $\mu$m, which was a resin film, was bonded to an aluminum foil having a thickness of 30 $\mu$m, which was a barrier layer, using an adhesive material and a large hole of a circular shape was formed one by one in the barrier layer. Equivalent circle radii of the large holes of the films were 116.79 $\mu$m, 209.14 $\mu$m, 575.08 $\mu$m, 988.45 $\mu$m, 2468.59 $\mu$m, and 4821.95 $\mu$m, respectively. With respect to six samples, a WVTR was measured. Measurement conditions were that a temperature 40°C and relative humidity at a water vapor supply side was 90%. A graph g5 in which the water vapor transmission rate and the opening area for six films formed with the large hole one by one were plotted was illustrated in Fig. 7. As illustrated in Fig. 7, it was confirmed that the water vapor transmission rate and the opening area was in the proportional relation having a gradient of $1 \pm 5\%$ on a double logarithmic graph in a region where the opening area was large, but deviated from the proportional relation having the gradient of $1 \pm 5\%$ on a double logarithmic graph when the opening area became smaller. Furthermore, in R/L $\leq$ 5, it was confirmed that deviation of the proportional relation occurred. The deviation of the proportional relation was determined by the value of R/L regardless of the material of the resin film serving as a base material.

(Experimental Example 1-2)

A standard film for calibration was obtained in the same manner as in the preparation of the standard film A for calibration, except that an opening portion was formed in a resist to have a radius of 50 $\mu$m by wet etching. When a surface region including a small hole of the obtained standard film for calibration was observed at a magnification factor of 1080 using a laser microscope, an opening area of the small hole was $7.5928 \times 10^{-9}$ m$^2$, and an equivalent circle radius was 49.16 $\mu$m. A measurement position of the opening area of the small hole was set in the same manner as in Experimental Example 1-1. In addition, a water vapor transmission rate of this standard film for calibration was about $6 \times 10^{-5}$ g/m$^2$/day under conditions that a temperature was 40°C and relative humidity was 90% RH.

(Experimental Example 2)

A standard film for calibration was prepared by the production method of the standard film for calibration according to the first embodiment.

(Masking process)

First, a resist pattern was formed into a columnar shape having a radius of 50 $\mu$m and a height of 56 $\mu$m on a polyethylene terephthalate (PET) sheet serving as a resin film having a thickness of 100 $\mu$m, using a photolithography technique. Specifically, a film-type photo resist was pasted, and ultraviolet light passed through a mask obtained by patterning of the opening portion was irradiated with an exposure apparatus. An unexposed portion was dissolved using aqueous sodium hydroxide, thereby being masked.

(Seed layer forming process)

Two-layered seed layer was formed which was sequentially disposed with a Ti layer (thickness of 0.1 $\mu$m) and a Cu layer (thickness of 0.3 $\mu$m) on the resin film, in which the resist pattern obtained by the masking process was formed, from the resin film side. Specifically, a vapor deposition material (Ti (purity of 99.9%), Cu (purity of 99.99%)) and the resin film are placed in an ion plating apparatus, and then an Ar gas was introduced into the ion plating apparatus being in a high vacuum state of about $10^{-3}$ to $10^{-4}$ Pa. Thereafter, the vapor deposition material was heated by an electron gun, a bias voltage was applied to the resin film, and the Ti film (film forming rate of 0.1 nm/sec) and the Cu film (film forming rate of 1 nm/sec) were sequentially formed.

(Lift-off process)

The resist was removed together with the seed layer on the resist by a lift-off process. Specifically, the resist was dissolved or expanded by being dipped in aqueous sodium hydroxide, thereby being removed. The seed layer formed on the resist was simultaneously removed in the above process.

(Plating treatment process)

The seed layer of the layered body obtained by the lift-off process was subjected to a plating treatment to form a Cu plating layer (thickness of 20 $\mu$m), whereby a standard film for calibration was obtained. Specifically, the plating treatment process was performed for a treatment time of 60 minutes under treatment conditions of a room temperature and a current value 1.5 A/dm$^2$ using a copper sulfate plating bath.
When a surface region including a small hole of the obtained standard film for calibration was observed at a magnification factor of 1080 using a laser microscope, an opening area of the small hole was $4.8509 \times 10^{-9}$ m$^2$, and an equivalent circle radius was 39.29 $\mu$m. A measurement position of the opening area of the small hole was set to be a lowest portion of the barrier layer (that is, a surface of the barrier layer on the resin film side and an exposed surface of the resin film in this Example). From the result of Example 2, it was confirmed that the production method according to the first embodiment can process the finer hole. In addition, a water vapor transmission rate of the standard film for calibration was about $2 \times 10^{-5}$ g/m$^2$/day under conditions that a temperature was 40°C and relative humidity was 90% RH. By the used of this standard film for calibration, it is possible to perform calibration of the water vapor transmission rate up to $1 \times 10^{-5}$ g/m$^2$/day.

(Experimental Example 3-1)

A standard film for calibration was produced by the production method of the standard film for calibration according to a second embodiment.

(Seed layer forming process)

Two-layered seed layer was formed which was sequentially disposed with a Ti layer (thickness of 0.1 $\mu$m) and a Cu layer (thickness of 0.3 $\mu$m) on the resin film, in which the resist pattern obtained by the masking process was formed, from the resin film side. Specifically, a vapor deposition material (Ti (purity of 99.9%), Cu (purity of 99.99%)) and the resin film are placed in an ion plating apparatus, and then an Ar gas was introduced into the ion plating apparatus being in a high vacuum state of about $10^{-3}$ to $10^{-4}$ Pa. Thereafter, the vapor deposition material was heated by an electron gun, a bias voltage was applied to the resin film, and the Ti film (film forming rate of 0.1 nm/sec) and the Cu film (film forming rate of 1 nm/sec) were sequentially formed.

(Masking process)

A resist pattern was formed on the seed layer into a columnar shape having a radius of 50 $\mu$m and a height of

56 $\mu$m on the resin film, using a photolithography technique. Specifically, a film-type photo resist was pasted, and ultraviolet light passed through a mask obtained by patterning of the opening portion was irradiated with an exposure apparatus. An unexposed portion was dissolved using aqueous sodium hydroxide, thereby being masked.

(Plating treatment process)

The seed layer was subjected to a plating treatment, whereby a Cu plating layer (thickness of 20 $\mu$m) was formed. Specifically, the plating treatment process was performed for a treatment time of 60 minutes under treatment conditions of a room temperature and a current value 1.5 A/dm$^2$ using a copper sulfate plating bath.

(Removing process - Removal of resist)

The resist formed in the small hole forming region was removed. Specifically, the resist was dissolved or expanded by being dipped in aqueous sodium hydroxide, thereby being removed.

(Removing process - Removal of seed layer)

A seed layer exposed by the removal of the resist was removed by etching. Specifically, the Cu layer was etched by being dipped in 40 mass% of ferric chloride solution at a normal temperature for one minute. Thereafter, the Ti layer was etched by being dipped in hydrogen peroxide etchant (ADEKATEC W manufactured by ADEKA Corporation), which is heated to 50°C, for 5 minutes.

When a surface region including a small hole of the standard film for calibration obtained in Experimental Example 3-1 was observed at a magnification factor of 1080 using a laser microscope, an opening area of the small hole was $8.4553 \times 10^{-9}$ m$^2$, and an equivalent circle radius was 51.88 $\mu$m. A measurement position of the opening area of the small hole was set in the same manner as in Experimental Example 2. In addition, a water vapor transmission rate of the standard film for calibration obtained in Experimental Example 3-1 was about $4 \times 10^{-5}$ g/m$^2$/day under conditions that a temperature was 40°C and relative humidity was 90% RH.

(Experimental Example 3-2)

A standard film for calibration was obtained in the same manner as in the masking process of Experimental Example 3-1, except that the resist pattern in Experimental Example 3-1 was replaced with a resist pattern of a columnar shape having a radius of 10 $\mu$m and a height of 30 $\mu$m.

When a surface region including a small hole of the standard film for calibration obtained in Experimental Example 3-2 was observed at a magnification factor of 2160 using a laser microscope, an opening area of the small hole was $2.49 \times 10^{-11}$ m$^2$, and an equivalent circle radius was 2.82 $\mu$m. A measurement position of the opening area of the small hole was set in the same manner as in Experimental Example 2. In addition, a water vapor transmission rate of the standard film for calibration obtained in Experimental Example 3-2 was about $3 \times 10^{-6}$ g/m$^2$/day under conditions that a temperature was 40°C and relative humidity was 90% RH.

From the result of Experimental Examples 3-1 and 3-2, it was confirmed that the production method according to the second embodiment can process the finer hole and can obtain the standard film for calibration that can perform calibration up to the water vapor transmission rate of about $1 \times 10^{-5}$ g/m$^2$/day or less.

Reference Signs List

| | |
|---|---|
| 10: | standard film for calibration |
| 11: | base material |
| 12: | barrier layer |
| 13: | small hole |
| 20: | standard film for calibration (multi-hole sample for calibration) |
| 21: | base material |
| 22: | barrier layer |
| 23: | small hole |
| 30, 40: | standard film for calibration |
| 31, 41: | resin film |
| 32, 42: | barrier layer (plating layer) |

| 33, 43: | small hole |
|---|---|
| 33a, 43a: | small hole forming region |
| 34, 44: | resist |
| 35 (35a, 35b), 45: | seed layer |

**Claims**

1. A standard film for calibration of a water vapor transmission rate measuring apparatus for measuring water vapor transmission rate of $10^{-3}$ g/m$^2$/day or less, the standard film for calibration being configured such that a barrier layer is provided on a resin film and the barrier layer includes at least one of small holes, wherein when an equivalent circle radius of the small hole is defined as R [$\mu$m] and a thickness of the resin film is defined as L [$\mu$m], a relation of R/L $\leq$ 5 is satisfied.

2. The standard film for calibration according to claim 1, wherein the thickness L of the resin film is 5 to 500 $\mu$m.

3. The standard film for calibration according to claim 1 or 2, wherein the barrier layer is a deposition layer of a metal, a metal oxide, or a silicon oxide, a metal foil, or a plating layer.

4. The standard film for calibration according to any one of claims 1 to 3, wherein the small hole is provided by etching, electroforming, laser machining, or grinding.

5. The standard film for calibration according to any one of claims 1 to 4, wherein the small hole is provided in the form of a plurality of pieces, and a minimum equivalent circle radius of each of the small holes is in the range of 70% or more of a maximum equivalent circle radius.

6. The standard film for calibration according to claim 5, wherein a gap between both edges of the small holes adjacent to each other is 2L or more.

7. A standard film set for calibration in which the standard film for calibration according to any one of claims 1 to 6 is provided in the form of a plurality of sheets, wherein the plurality of standard films for calibration are formed in combination of films having the different number of the small holes provided in a test surface, and a minimum equivalent circle radius of each of the small holes provided in the plurality of standard films for calibration is in the range of 70% or more of a maximum equivalent circle radius.

8. The standard film set for calibration according to claim 7, wherein at least one of the plurality of standard films for calibration is a film in which an absolute value of water vapor transmission rate is determined.

9. A calibration method using the standard film set for calibration according to claim 7 or 8, the method comprising:

   a process of measuring water vapor transmission rate of each of the standard films for calibration;
   a process of plotting, on a double logarithmic graph, an opening area [m$^2$] and the water vapor transmission rate [g/m$^2$/day] of the small hole of each of the standard films for calibration; and
   a process of confirming that each plot is on a straight line having a gradient of 1 $\pm$ 5%.

10. A production method of a standard film for calibration of a water vapor transmission rate measuring apparatus for measuring water vapor transmission rate of $10^{-3}$ g/m$^2$/day or less, the standard film for calibration being configured such that a barrier layer is provided on a resin film and the barrier layer includes at least one of small holes, the production method comprising:

    a process 1b of forming a seed layer on a surface of the resin film;
    a process 2b of masking a small hole formation scheduled region on a surface of the seed layer with a resist;
    a process 3b of performing a plating treatment on a surface of the seed layer other than the small hole formation scheduled region and providing a plating layer serving as the barrier layer; and
    a process 4b of removing the resist provided on the small hole formation scheduled region and the seed layer immediately below the resist, wherein
    the small hole has an equivalent circle radius of less than 100 $\mu$m.

**11.** The production method of a standard film for calibration according to claim 10, wherein the seed layer in the process 1b is an electroless plating layer.

**12.** A production method of a standard film for calibration of a water vapor transmission rate measuring apparatus for measuring water vapor transmission rate of $10^{-3}$ g/m$^2$/day or less, the standard film for calibration being configured such that a barrier layer is provided on a resin film and the barrier layer includes at least one of small holes, the production method comprising:

a process 1a of masking a small hole forming region on a surface of the resin film with a resist;
a process 2a of forming a seed layer on a surface of the resist and on a surface of the resin film around the resist;
a process 3a of removing the resist in a lift-off manner together with the seed layer on the surface of the resist; and
a process 4a of performing a plating treatment on a surface of the seed layer remaining on the surface of the resin film and providing a plating layer serving as the barrier layer having the small hole, wherein
the small hole has an equivalent circle radius of less than 100 $\mu$m.

**13.** The production method of a standard film for calibration according to any one of claims 10 to 12, wherein when an equivalent circle radius of the small hole is defined as R [$\mu$m] and a thickness of the plating layer is defined as T [$\mu$m], a relation of R/T < 3 is satisfied.

[Fig.1]

10

13

12

11

[Fig.2]

10

12

13

[Fig.3]

20

23 23 23 23 23

22

21

[Fig.4]

[Fig.5]

[Fig.6]

```
┌─────────────────────────────────────┐
│ MEASUREMENT OF                       │
│ SAMPLE FOR CALIBRATION 10            │
└─────────────────────────────────────┘
                  │
                  ▼
┌─────────────────────────────────────┐
│ MEASUREMENT OF                       │
│ SAMPLE FOR CALIBRATION 20            │
└─────────────────────────────────────┘
                  │
                  ▼
┌─────────────────────────────────────┐
│                                      │
│  log(WVTR₂₀) − log(WVTR₁₀)           │
│  ─────────────────────────── = a     │
│  log(S₂₀) − log(S₁₀)                 │
│                                      │
│ IN FORMULA 1, "a" REPRESENTS 1 ± 5%. │
└─────────────────────────────────────┘
                  │
                  ▼
        ┌──────────────────┐
        │ COMPLETION OF    │
        │ CALIBRATION      │
        └──────────────────┘
```

$$\frac{\log(WVTR_{20}) - \log(WVTR_{10})}{\log(S_{20}) - \log(S_{10})} = a$$

IN FORMULA 1, "a" REPRESENTS 1 ± 5%.

[Fig.7]

[Fig.8]

21

34    33a

31

MASKING PROCESS

35(35b)

35(35a)    34    33a

31

SEED LAYER FORMING PROCESS

→ *

35(35a)    33a

* →

31

LIFT-OFF PROCESS

35(35a)    33    30

32

31

PLATING TREATMENT PROCESS

[Fig.9]

45

41

SEED LAYER FORMING PROCESS

44    43a

45

41

MASKING PROCESS

→ *

44    43a

45    42

* →

41

PLATING TREATMENT PROCESS

40

43

45    42

41

REMOVING PROCESS

22

## INTERNATIONAL SEARCH REPORT

International application No.

PCT/JP2015/065406

A.  CLASSIFICATION OF SUBJECT MATTER
*G01N15/08*(2006.01)i, *G01N15/00*(2006.01)i

According to International Patent Classification (IPC) or to both national classification and IPC

B.  FIELDS SEARCHED

Minimum documentation searched (classification system followed by classification symbols)
G01N15/08, G01N15/00, C23C16/02, B23B9/00, G01N1/00

Documentation searched other than minimum documentation to the extent that such documents are included in the fields searched
Jitsuyo Shinan Koho          1922–1996    Jitsuyo Shinan Toroku Koho    1996–2015
Kokai Jitsuyo Shinan Koho    1971–2015    Toroku Jitsuyo Shinan Koho    1994–2015

Electronic data base consulted during the international search (name of data base and, where practicable, search terms used)
JSTPlus/JMEDPlus/JST7580(JDreamIII), WPI

C.  DOCUMENTS CONSIDERED TO BE RELEVANT

| Category* | Citation of document, with indication, where appropriate, of the relevant passages | Relevant to claim No. |
|---|---|---|
| A | DEMOREST R L, MAYER D W, Important new developments in measuring the water vapor transmission rates of barrier materials., TAPPI Proc Polym Laminations Coat Conf, 1996, Vol. 1996 No.1, Page.129-137 | 1-13 |
| A | JP 41-22318 Y1 (Japan Radio Co., Ltd.), 07 November 1966 (07.11.1966), entire text; all drawings (Family: none) | 1-13 |
| A | ROSSI G, NULMAN M, Effect of local flaws in polymeric permeation reducing barriers., J Appl Phys, 1993.11.01, Vol.74 No.9, Page.5471-5475 | 1-13 |

☒  Further documents are listed in the continuation of Box C.          ☐  See patent family annex.

| | |
|---|---|
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 11 August 2015 (11.08.15) | 25 August 2015 (25.08.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/065406

C (Continuation). DOCUMENTS CONSIDERED TO BE RELEVANT

| Category* | Citation of document, with indication, where appropriate, of the relevant passages | Relevant to claim No. |
|---|---|---|
| A | CARCIA P. F., MCLEAN R. S., GRONER M. D., DAMERON A. A., GEORGE S. M., Gas diffusion ultrabarriers on polymer substrates using Al2O3 atomic layer deposition and SiN plasma-enhanced chemical vapor deposition, J Appl Phys, 2009.07.15, Vol.106 No.2, Page.023533 | 1-13 |
| A | WO 2013/015412 A1 (Toppan Printing Co., Ltd.), 31 January 2013 (31.01.2013), paragraph [0103]; fig. 3 & JP 2013-815412 A    & US 2014/0141255 A1 & EP 2737996 A1       & CN 103732392 A & KR 10-2014-0043747 A  & TW 201315601 A | 1-13 |
| A | JP 2012-103151 A (Oike & Co., Ltd.), 31 May 2012 (31.05.2012), entire text; all drawings (Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012103151 A
- JP 62005639 A
- JP 62211924 A
- JP 2011047855 A

**Non-patent literature cited in the description**

- **G. ROSSI ; M. NULMAN.** Effect of local flaws in polymeric permeation reducing barriers. *J. Appl. Phys.,* 1993, vol. 74, 5471-5475